# EUROPEAN PATENT APPLICATION

(11) **EP 2 736 221 A1**
(43) Date of publication of application: **28.05.2014**
(21) Application number: 12306456.0
(22) Date of filing: 22.11.2012
(51) Int. Cl.: H04L 29/08

(54) **Improved synchronization of an application run on two distinct devices**

(71) Applicant: NEC Corporation, Minato-ku, Tokyo 108-8001 (JP)
(72) Inventor: Beaugrand, Fabrice, 92500 RUEIL MALMAISON (FR); Collet, Thibaut, 78000 VERSAILLES (FR)
(74) Representative: Cabinet Plasseraud

(57) **Abstract**

The invention relates to a method for running a computer application on a second device (D2), at a same state as if running on a first device (D1), the method comprising the steps of:
- upon reception from the first device of shared data related to the application running on the first device, the second device stores said shared data in a first dedicated memory area of the second device, while private data used for running the application installed on the second device are kept stored in a second dedicated memory area of the second device,
- upon a selection from a user between using said shared data or using said private data, the second device runs the application respectively:
■ with said shared data at a same state as if running on the first device (ISA),
■ or with said private data at a previous state of running on the second device (INA).

## Description

The present invention relates to an updating of data related to a computer application running on a first device, with data related to a same computer application and running on a second device.

In fact, several communicating devices (for example Smartphones, tablets, mobile phones, etc.) run a same operating system (Android for example). The devices have the ability to exchange data between them thanks a direct link (Bluetooth, WiFi direct, NFC, et.) or via a remote server.

However, only few applications offer an integrated synchronization solution to continue an application from a device to another device with same updated data (i.e. at a same state of a game, or of a document, etc.).

Among known solutions to synchronise application data from device to device, one can cite the "iCloud" or the principle of "dropbox". Today, the known solutions are based on the principle of the CLOUD and are limited to the device configured with the backup server configurations (iCloud account, or dropbox account, etc.).

However, there is no easy solution:
- to send application data from a first device to a second device (in an easy way, such as a "One Click" operation),
- to send back the result on the application data from the second device to the first device (or to another third device),
- to run an application in the second device with data:
   ■ coming from the first device,
   ■ and with application data of the second device,
- to "undo" an operation of synchronization.

The present invention aims to improve the situation.

The invention aims at a method for running a computer application on a second device, at a same state as if running on a first device, the method comprising the steps of:
- upon reception from the first device of shared data related to the application running on the first device, the second device stores said shared data in a first dedicated memory area of the second device, while private data used for running the application installed on the second device are stored in a second dedicated memory area of the second device,
- upon a selection from a user between using said shared data or using said private data, the second device runs the application respectively:
   ■ with said shared data at a same state as if running on the first device,
   ■ or with said private data at a previous state of running on the second device.

Therefore, the invention makes it possible to solve the problems stated above since a specific folder (according to a technical concept similar to a "backup folder") can be created in the memory of a current local device (the aforesaid second device), for application's data received from a remote device (the aforesaid first device). Then, when the user executes the application on the local device, the application can use either data previously used for running the application on the local device or data stored in the specific folder, such as a dedicated directory in the memory of the local device (named "Anteroom" hereafter).

An end user could retrieve thus on that local device the application's state of the remote device without erasing data related to a state of the application as installed in the local device.

In an embodiment, the first device selects data to share with the second device and sends to the second device said data to share. To that end, the first device can run an add-on software for selecting data to share and to send to the second device. The first device can have also a memory including an area storing data to share (i.e. not a temporary storage).

In an embodiment, the first device can compress data to share advantageously in a single file before sending them to the second device, and the second device can decompress data received from the first device in the aforesaid first dedicated memory area.

Preferably, the first and second devices have a same operating system (so as to run the same application without necessary adaptations).

In an embodiment, a symbolic link pointing at data, among shared data and private data, and to be used by the application running on the second device is defined on the basis of a selection from the user. In fact, the user can choose to run the application with the private data of his device or to run the application with the shared data received for example from another device.

To that end, in an embodiment, the second device runs an add-on software for storing shared data received from the first device in said first dedicated memory area, and for defining the symbolic link as pointing at a content of said first dedicated memory area upon selection of the user to run the application with said shared data.

Preferably, upon a new implementation of the method defined above and upon reception of new shared data, at least from the first device, the content of the first dedicated memory area is replaced by the latest shared data newly received.

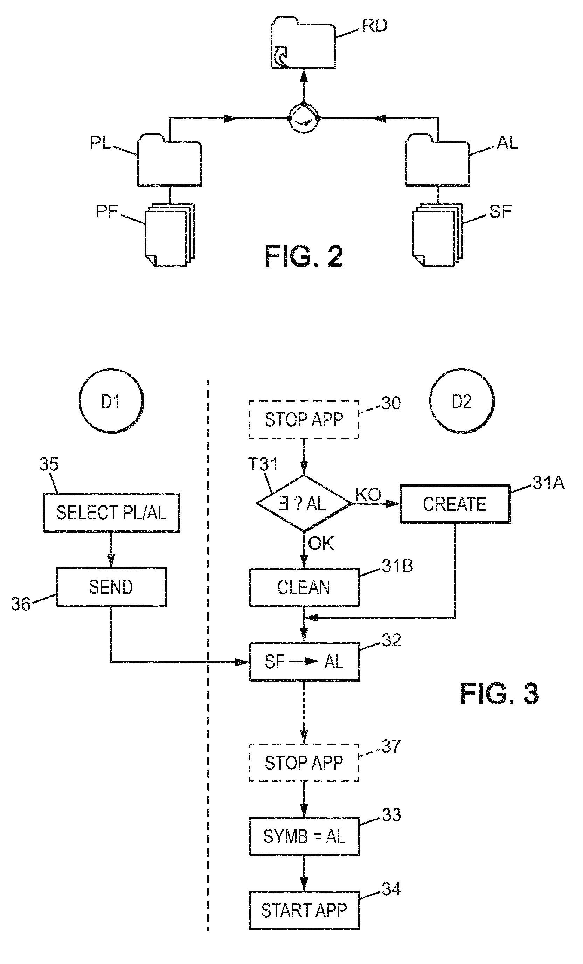

The present invention aims also at a computer program product, comprising instructions for performing the method as presented above, when run by a processor. Figure 3 described in details hereafter can represent an example of a flow chart of a general algorithm of that program.

The present invention aims also at a device running a computer application, and comprising means for running said application at a same state as if running on a different device, said means comprising:
- a communication interface for receiving from the other device shared data related to the application running on the other device,
- a memory to store said shared data in a first dedicated memory area of the second device, while private data used for running the application installed on the second device are stored in a second dedicated memory area of the second device,
- a human/machine interface for, upon a selection from a user between using said shared data or using said private data, controlling the run of the application respectively:
   ■ with said shared data at a same state as if running on the first device,
   ■ or with said private data at a previous state of running on the second device.

The present invention is illustrated by way of example, and not by way of limitation, in the figures of the accompanying drawings, in which like reference numerals refer to similar elements and in which:
- Figure 1 shows schematically two communication devices for performing the invention,
- Figure 2 shows an example of structure memory for performing the invention,
- Figure 3 shows an example of a flow chart of a method according to an embodiment of the invention.

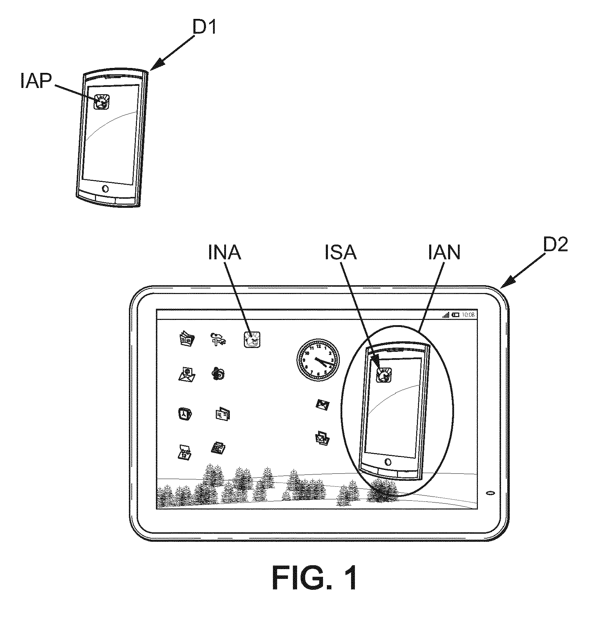

Referring to Figure 1, a first communication device D1 (remote device) is able to communicate, through a wireless link for example, with a second communication device D2 (local device). Both devices D1 and D2 can run a same computer application (a game, a document editor with bookmarks, or any kind of application involving an update of data resulting from its running). Moreover, the two devices can run a same operating system so that data transferred from one device to the second device can be interpreted by the application of the second device in the environment of its operating system. As a variant, the computer application software can be compatible with the operating systems of both devices, or adapting software can be used also.

In an embodiment of the invention, an add-on software (for example a plug-in, or a specific software) running on the first device provides a set of data which are essential for running the application on the second device, and at the same state as if it was running on the first device. That software can extract, for example, such essential data from the device D1 and put them into a specific repository of the memory of the first device D1, as data intended to be shared with other devices. Then, upon selection of a user of such data (through a human/machine interface using for example a specific icon), a communication interface of the device D1 can be activated to send them to one or several other devices.

The host device (D2) stores then data received from the first device D1, in a specific repository (for example a directory where data, received for example in the way of a compressed file (such as a "zip" file), are decompressed (e.g. "unzipped")). It should be added that in applications such as games for example only few data need to be sent (e.g. scores, a current level, etc.), usually representing less than one Mo.

It should be understood thus that a device D1 (or D2) can store:
- a first set of data (private data) for running the application in a current state in that device, and
- a second set of data (shared data) for running the application in another device or in the same device but at a state as if it was running on another device,
while a usual device from the prior art, implementing a synchronization, would erase and replace previously used data by recently received data.

The communicating devices can be a Smartphone, a mobile phone, a tablet, etc.

In the example of Figure 1, the first device D1 is a Smartphone. A user of the first D1 device runs an application on his Smartphone and wishes to push the application data to a second device which is a tablet D2, in the example shown in Figure 1. The application data received on the tablet D2 are stored in a memory area called hereafter "Anteroom". The user can now run the same application on his tablet D2 using the application data coming from the Smartphone D1. On such devices, the data transferring routine can be identified thanks to a dedicated icon.

In the example of Figure 1, the device D1 has a screen showing an icon IAP of the application running in a current state on the device D1. The device D2 has a screen showing an icon INA of the same application, but running in a different current state on the device D2 (as a native application of device D2). When the two devices D1 and D2 are connected (for example through a wireless link), an icon IAN related to the Anteroom data appears on the screen of the second device D2 and, within that icon IAN, the icon ISA of a same application having data which can be shared appears.

The user of device D2 has therefore the choice to run the application through two different icons:
- a first one INA related to a native application, which uses the tablet application data, and
- a second one ISA related to an application using the Anteroom data, which stores the hosted external device D1 application data.

According to possible embodiments, one anteroom can be provided in a current device (D2) for each remote devices (D1 and others) exchanging data with the current device D2. In a variant embodiment, only one anteroom for interaction with any remote devices can be provided. In that variant embodiment, for a same application, data previously received from a first remote device can be erased and replaced by data received from a second current remote device.

It should be noted that a collision between the tablet application data and the Smartphone application data can be prevented thanks to the use of the Anteroom, as described hereafter with reference to Figure 2.

An example of memory structure of a device D1 or D2 is shown on Figure 2. A directory RD currently used by the application when running, represents a symbolic link to where the application running on such a device can point to import related data (such as game scores, level, etc.). It represents thus the application data location. It can be filled with data stored in a private location PL (storing private files PF) or with data stored in the Anteroom location AL (storing shared files SF). Therefore, the private location corresponds to a memory area created by the application when installed and contains data created by the local device. The anteroom location corresponds to a memory area storing sets of data received from other devices using a same application.

In order to provide a solution compliant with any application, the application data are managed as a "backup folder" data and copied from the remote device to the currently used device to run the application on the local device at a same state as if running on the remote device.

Then, to select the application's data to be used, the aforesaid data set is copied and moved to the location where the current application expects to find data (old data are temporary moved/saved in another location such as a "backup folder"). This operation must be done before launching the current application.

In an embodiment, this operation is performed by using a symbolic link as explained above: the application's data directory provides thus a symbolic link pointing at a currently usable set of data. To that end, the aforesaid add-on software can modify a memory address for accessing to data that the application can use.

Therefore, referring now to Figure 3, when a new set of data is received in a local device D2, from another device D1:
- the application is stopped if it was previously running with data of the Anteroom directory, in step 30,
- the Anteroom directory is created in step 31 A (if it does not exist already - arrow KO from test T31) or cleaned in step 31 B (if it exists already - arrow OK from test T31),
- the received data are decompressed in the anteroom directory, in step 32,
- if it is wished further to run the application with the newly received shared files data, the symbolic link in the application is to be set to point at the Anteroom directory, as described hereafter..

More generally, if it is wished later on to run the application with a selected set of data (for example with the newly received shared set of data):
- the application is stopped (if it was previously running with the private data), as shown as step 37 in Figure 3,
- the symbolic link is changed (step 33) to point at the Anteroom location,
- and the application is restarted (step 34 of Figure 3).

It should be noted that, according to a choice of the user of the local device D2, it is possible for the user to control an erasure of the private data and their replacement by the latest received shared data. However, that procedure is not automatic like in a synchronization method according to the prior art. Both data, private and shared, are kept stored in a memory of the local device.

On the other hand, to send data to another remote device D2, referring again to Figure 3:
- files in the selected directory (private or anteroom) are selected and can be compressed (advantageously in a single file), in step 35, and
- sent to the remote device in step 36.

Of course, the present invention is not limited to the description provided above as an example of embodiment; it encompasses possible variants.

For example, Figure 1 shows wireless communication devices such as a Smartphone and a tablet to perform the invention, but the invention can be carried out also while using simply two computers (PC or laptop) and a cable between them (a USB cable for example).

## Claims

1. A method for running a computer application on a second device, at a same state as if running on a first device, the method comprising the steps of:
- upon reception from the first device of shared data related to the application running on the first device, the second device stores said shared data in a first dedicated memory area of the second device, while private data used for running the application installed on the second device are stored in a second dedicated memory area of the second device,
- upon a selection from a user between using said shared data or using said private data, the second device runs the application respectively:
■ with said shared data at a same state as if running on the first device,
■ or with said private data at a previous state of running on the second device.

2. The method of claim 1, wherein the first device selects data to share with the second device and sends to the second device said data to share.

3. The method of claim 2, wherein the first device compresses said data to share in a single file before sending them to the second device.

4. The method of claim 3, wherein the second device decompresses data received from the first device in said first dedicated memory area.

5. The method according to anyone of claims 1 to 4, wherein said first and second devices have a same operating system.

6. The method according to anyone of claims 1 to 5, wherein a symbolic link pointing at data, among said shared data and said private data, and to be used by the application running on the second device is defined on the basis of said selection from the user.

7. The method according to claim 6, wherein said second device runs an add-on software for storing shared data received from the first device in said first dedicated memory area, and for defining the symbolic link as pointing at a content of said first dedicated memory area upon selection of the user to run the application with said shared data.

8. The method according to anyone of claims 1 to 7, wherein, upon a new implementation of said steps and upon reception of new shared data, at least from the first device, a content of said first dedicated memory area is replaced by said new shared data.

9. A computer program product, comprising instructions for performing the method as claimed in any of the preceding claims, when run by a processor.

10. A device running a computer application, wherein it comprises means for running said application at a same state as if running on a different device, said means comprising:
- a communication interface for receiving from the other device shared data related to the application running on the other device,
- a memory to store said shared data in a first dedicated memory area of the second device, while private data used for running the application installed on the second device are stored in a second dedicated memory area of the second device,
- a human/machine interface for, upon a selection from a user between using said shared data or using said private data, controlling the run of the application respectively:
■ with said shared data at a same state as if running on the first device,
■ or with said private data at a previous state of running on the second device.
